# EUROPÄISCHE PATENTANMELDUNG

(11) **EP 4 779 056 A1**
(43) Veröffentlichungstag der Anmeldung: **22.07.2026**
(21) Anmeldenummer: 25153124.0
(22) Anmeldetag: 21.01.2025
(51) Int. Cl.: C25B 1/04, F16L 9/127, F16L 58/00, H01M 8/00, H01R 4/60, F16L 9/14, F16L 25/01

(54) **ISOLATIONSFITTING**

(71) Anmelder: Georg Fischer Rohrleitungssysteme AG, 8201 Schaffhausen (CH)
(72) Erfinder: Fend, Peter, 03640 Monovar (ES); Manger, Fabian, 78176 Blumberg (DE)
(74) Vertreter: Fenner, Seraina

(57) **Zusammenfassung**

Isolationsfitting (1) für den Einbau in eine metallische Rohrleitung (4), die unter einer elektrischen Spannung steht, beinhaltend, ein Kunststoffrohr (2) und beidseitig daran angeordnete Verbindungselemente (3) zum Verbinden des Isolationsfittings (1) mit der metallischen Rohrleitung (4), wobei das Kunststoffrohr (2) zur Isolation leitfähig ist.

## Beschreibung

Isolationsfitting für den Einbau in eine metallische Rohrleitung, die unter einer elektrischen Spannung steht, beinhaltend ein Kunststoffrohr und beidseitig daran angeordnete Verbindungselemente zum Verbinden des Isolationsfittings mit der metallischen Rohrleitung.

Bei Rohrleitungen, die unter einer elektrischen Spannung stehen und in eine Sammelleitung zusammengeführt werden ist es wichtig, diese vor dem Anschliessen an eine Sammelleitung zu isolieren, um wegen der unterschiedlichen Spannungsniveaus der zuführenden Rohrleitungen Kurzschlüsse zu vermeiden.

Vor allem in Wasserstoffgeneratoren bei seriell verschalteten Stacks müssen Zuführungsleitungen in die Sammelleitung elektrisch isoliert ausgeführt sein, da die Stacks auf verschiedenen Spannungsniveaus sind und sonst Kurzschlüsse verursachen würden.

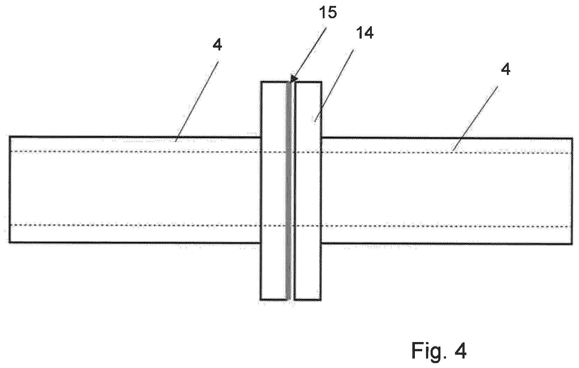

Aus dem Stand der Technik sind Rohrverbindungen bekannt, die zwischen zwei Flanschen eine Isolierplatte oder eine Lackschicht zur Isolation aufweisen, ersichtlich aus Fig. 4. Solche Flanschverbindungen sind bei Medien, die durch die Rohre transportiert werden und eine gewisse Leitfähigkeit aufweisen, nicht einsetzbar, da eine durchmesserabhängige Mindeststrecke erforderlich ist, um den minimal notwendigen Isolationswiderstand zu erreichen. Solche Flanschverbindungen sind für Wasserstoffgeneratoren nicht geeignet.

Die WO 2023/067565 A1 offenbart eine isolierende Verbindung einer Rohrleitung, wobei die Isolation konstant überwacht wird, um sicherzustellen, dass kein Stromfluss in schädigender Grösse vorliegt. Eine Verschlechterung der Isolierung aufgrund einer Verringerung des Isolationswiderstandes der Isolierung könnte beispielsweise zu Korrosionserscheinungen führen, welche die mechanischen Eigenschaften der Isolierverbindung verschlechtern würden, bis hin zum Versagen mit den daraus resultierenden Sicherheitsproblemen, sowohl für die Rohrleitung als auch für die Betreiber.

Nachteilig bei Isolierungen, die die Leitfähigkeit praktisch vollständig unterbinden ist, dass eine Verschmutzung mit ausreichender Feuchtigkeit an einem isolierenden Teilstück einen Elektrolyten bildet, wodurch ein Kriechstrom fliesst. Wenn der Kriechstrom durch Trocknen der Verschmutzung an einer Stelle unterbrochen wird, entsteht an dieser Stelle ein Abreissfunken. Dessen Energie führt zu einer partiellen Veränderung des Isolierstoffes durch thermisches "Verkohlen", was das Material schädigt und fortschreitend leitfähige Pfade erzeugt, welche dauerhaft zur Kriechwegbildung führen und damit die Isolationsfähigkeit des Isolierstoffes unvorhersehbar reduzieren.

Es ist Aufgabe der Erfindung ein Isolationsfitting vorzuschlagen, bei dessen Einsatz in metallischen Rohrleitungen, die unter einer elektrischen Spannung sind, keine Abreissfunken entstehen, auch wenn eine Verschmutzung vorliegt und vorzugsweise für den Transport von Medien, die eine gewisse Leitfähigkeit aufweisen geeignet sind.

Diese Aufgabe wird erfindungsgemäss dadurch gelöst, dass das Kunststoffrohr des Isolationsfittings zur Isolation leitfähig ist. Dadurch dass der Kunststoff des Kunststoffrohres des Isolationsfittings aus einem leitenden Kunststoff hergestellt ist, wird über das Isolationsfitting ein kontinuierlicher Stromfluss erzeugt, aufgrund dessen lokale Spannungsdifferenzen vermieden werden. Vorzugsweise ist dabei zu beachten, dass durch den spezifischen Durchgangswiderstand p des Kunststoffrohres kein Spannungsabfall erzeugt wird, wenn eine leitfähige Verschmutzung an einer Stelle abtrocknet und ihr Kriechstrom dadurch unterbrochen wird, d. h es findet kein Stromabriss statt. Damit wird das Entstehen von Abreissfunken beim Abtrocknen einer Verschmutzung verhindert, da der Strom durch den leitfähigen Kunststoff fliessen kann und damit keine nennenswerten lokalen Spannungsdifferenzen entstehen können. Eine Verschmutzung kann am Innen- und/oder Aussendurchmesser des Kunststoffrohrs auftreten. Das erfindungsgemässe Isolationsfitting für den Einbau in eine metallische Rohrleitung, die unter einer elektrischen Spannung steht, beinhaltet ein Kunststoffrohr und beidseitig daran angeordnete Verbindungselemente zum Verbinden des Isolationsfittings mit der metallischen Rohrleitung. Das Kunststoffrohr muss eine gewisse Länge aufweisen, die einer durchmesserabhängigen Mindeststrecke entspricht, um den notwendigen Isolationswiderstand, verursacht durch die Leitfähigkeit des Mediums, zu erreichen. Werkstoffe mit einem hohen CTI-Wert sind aufgrund ihrer geringeren Festigkeit und tiefen Temperaturbeständigkeit nicht dazu geeignet eine solche Länge aufzuweisen. Zudem neigt das erfindungsgemässe Isolationsfitting aufgrund einer solchen Bauform rasch zur Verschmutzung, was wiederum zu möglichen Kriechströmen in der Verschmutzung führt, die bei einer Unterbrechung zu Abrissfunken führen. Aufgrund dessen wird wie oben beschrieben ein leitender Kunststoff verwendet bei dem der CTI-Wert nicht massgebend ist und so auch die benötigte Stabilität und Temperaturbeständigkeit aufweist. Die Verbindungselemente können aus Kunststoff und/oder einem metallischen Werkstoff sein. Das Kunststoffrohr zur Isolation ist leitfähig. Als vorteilhaft hat sich gezeigt, wenn das Kunststoffrohr einen definierten spezifischen Durchgangswiderstand p aufweist. Vorzugsweise sind auch die Verbindungselemente leitfähig.

Als vorteilhaft hat sich gezeigt, wenn das Kunststoffrohr einen spezifischen Durchgangswiderstand p zwischen 10⁴ bis 10⁹ Ωm aufweist. Dadurch wird eine Leitfähigkeit des Kunststoffrohres erzielt, wodurch der Stromfluss über das Kunststoffrohr gewährleistet ist und dadurch keine Abreissfunken entstehen können.

Vorzugsweise weist das Kunststoffrohr einen spezifischen Oberflächenwiderstand R□ zwischen 10⁵ bis 10¹² Ω auf. Der spezifische Oberflächenwiderstand ist der elektrische Widerstand gemessen auf der Oberfläche eines Gegenstandes. Die Messung erfolgt zwischen zwei parallelen Elektroden geringer Breite und einer Länge. Durch den spezifischen Oberflächenwiderstand R□ zwischen 10⁵ bis 10¹² Ω wird gewährleistet, dass die Leitfähigkeit der Oberfläche des Kunststoffrohres höher ist als diejenige die bei einer möglichen Verschmutzung vorliegt, bzw. der Oberflächenwiderstand des Rohres geringer ist als der der Verschmutzung, wodurch der Stromfluss über das Kunststoffrohr gewährleistet ist, und kein Abreissfunken entsteht, auch wenn die Leifähigkeit in der Verschmutzung aufgrund des Abtrocknens der Verschmutzung nachlässt oder auch vollständig aufgehoben ist.

Als vorteilhaft hat sich gezeigt, wenn das Kunststoffrohr einen geringeren spezifischen Durchgangswiderstand p aufweist als der geringste auftretende Kriechwiderstand der Verschmutzung. Wie bereits erwähnt hat dies den Vorteil, dass ein konstanter Stromfluss im Kunststoffrohr gewährleistet ist. Als bevorzugte Ausführungsform hat sich gezeigt, wenn das Kunststoffrohr einen geringeren spezifischen Oberflächenwiderstand R□ aufweist als der Oberflächenwiderstand, der durch die Verschmutzung an der äusseren Oberfläche des Kunststoffrohrs gebildet ist. Dadurch wird gewährleistet, dass die Leitfähigkeit des Kunststoffrohres bzw. dessen Oberfläche höher ist als diejenige, die bei einer möglichen Verschmutzung vorliegt, bzw. der Widerstand der Kunststoffrohroberfläche geringer ist als der der Verschmutzung, wodurch der Stromfluss über das Kunststoffrohr gewährleistet ist und kein Abreissfunke entsteht auch wenn die Leifähigkeit in der Verschmutzung aufgrund deren Abtrocknens nachlässt oder auch vollständig aufgehoben ist.

Als bevorzugte Ausführungsform hat sich gezeigt, wenn das Kunststoffrohr aus einem Compound hergestellt ist. Durch das Beimischen von leitfähigen Additiven wird ein nicht leitender Kunststoff zu einem leitenden Kunststoff erweitert.

Vorzugsweise weist das Compound als Basis einen thermoplastischen Kunststoff auf, wobei dem thermoplastischen Kunststoff ein leitfähiges Additiv beigemengt ist. Dadurch dass das Kunststoffrohr nicht aus einem nicht leitenden Kunststoff besteht, sondern aus einem Kunststoff, der leitend ist und einen Stromfluss zulässt bzw. gewünscht ist, kann der CTI-Wert eines Kunststoffs unberücksichtigt bleiben und es besteht eine freie Material- bzw. Kunststoffwahl.

Als bevorzugte Ausführungsform hat sich gezeigt, wenn dem thermoplastischen Kunststoff zur Erhöhung der Leitfähigkeit Kohlenstoff beigemischt ist. Der Kohlenstoff kann in unterschiedlichen Formen vorliegen, wie Fasern, Pulver, Flocken und anderen bekannten Formen. Vorzugsweise ist Grafit als leitendes Additiv in den Kunststoff beigemischt. Zur Erhöhung der Leitfähigkeit des Kunststoffs eignen sich als Additive auch Stearate und speziell eingebundene metallische Salze, wie z. B. CuCl₂.

Als bevorzugte Ausführungsform hat sich gezeigt, wenn als thermoplastischer Kunststoff PEEK eingesetzt ist. PEEK fällt zwar in die Isolationsgruppe IIIb und weist eine Kriechstromfestigkeit von 100 ≤ CTI < 175 auf, weshalb PEEK bei einer Spannung über 630 V gemäss der Norm EN IEC 60664-1 als Isolator nicht empfohlen wird. Da aber beim erfindungsgemässen Isolationsfitting prinzipbedingt keine Abreissfunken entstehen können, ist PEEK durchaus als bevorzugter Kunststoff mit hoher Stabilität und Temperaturbeständigkeit anzuwenden.

Das erfindungsgemässe Isolationsfitting wird vorzugsweise als Verbindung von Rohrleitungen im Wasserstoffgenerator verwendet. Bei seriell verschalteten Stacks vom Wasserstoffgenerator müssen die Zuführungsrohrleitungen in die Sammelleitung elektrisch isoliert ausgeführt sein, da sich die Stacks auf verschiedenen Spannungsniveaus befinden und sonst ein Kurzschluss auftreten würde. Die zu isolierende Spannung beträgt bis zu 1500 V, was spezielle Anforderungen an die Konstruktion und Materialauswahl stellt, weshalb das erfindungsgemässe Isolationsfitting leitend ist, und einen Stromfluss zulässt, wobei durch den spezifischen Durchgangswiderstand p des Kunststoffrohres kein Stromabriss entstehen kann.

Das erfindungsgemässe Isolationsfitting wird in Rohrleitungen verwendet in denen eine elektrische Spannung von > 630 V vorliegt, dort wird das Isolationsfitting in die Rohrleitung eingesetzt, um Kurzschlüsse zu vermeiden.

Alle Ausgestaltungmöglichkeiten sind untereinander frei kombinierbar sowie zur Vermeidung von Wiederholungen sich die genannten Merkmale des Isolationsfittings automatisch auch auf die Verwendung und umgekehrt beziehen.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine schematische Darstellung eines erfindungsgemässen Isolationsfittings, das einen leitenden Kunststoff verwendet.
- Fig. 2: eine schematische Darstellung eines Isolationsfittings aus dem Stand der Technik, das einen nichtleitenden Kunststoff verwendet und
- Fig. 3: eine schematische Darstellung eines Wasserstoffgenerators und
- Fig. 4: eine aus dem Stand der Technik bekannte isolierende Flanschverbindung.

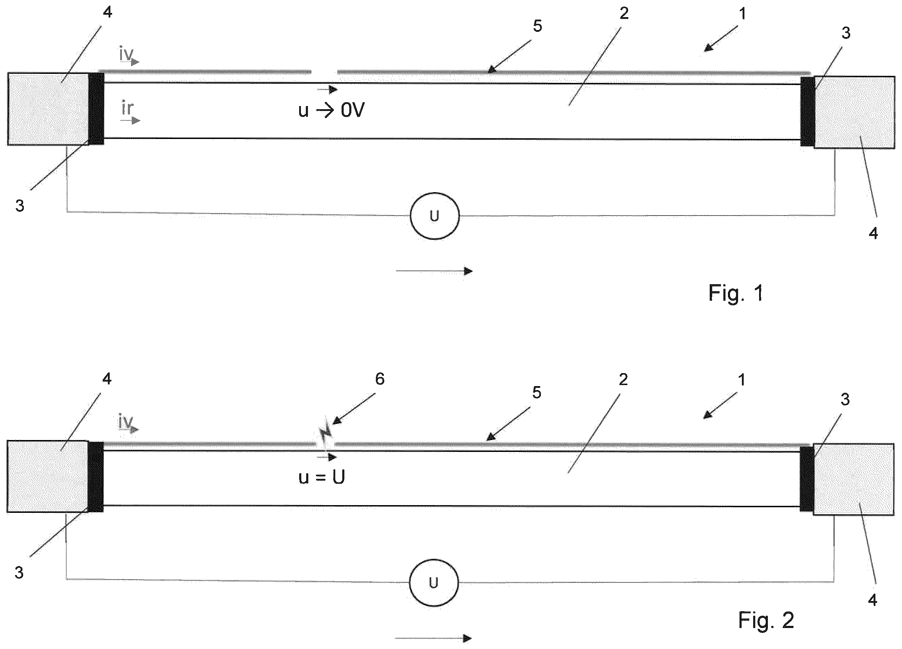

Die in Fig. 1 dargestellte Zeichnung zeigt eine schematische Darstellung eines erfindungsgemässen Isolationsfittings, bei dem ein leitender Kunststoff eingesetzt ist. Das erfindungsgemässe Fitting 1 weist ein zwischen zwei Verbindungselementen 3 angeordnetes Kunststoffrohr 2 auf. Die Verbindungselemente 3 können aus Kunststoff, einem elektrisch ableitfähigen Material oder auch einem metallischen Werkstoff sein. Das Isolationsfitting 1 wird in eine metallische Rohrleitung 4 eingebaut, um Kurzschlüsse zwischen Rohrleitungen mit unterschiedlichen Spannungsniveaus zu vermeiden.

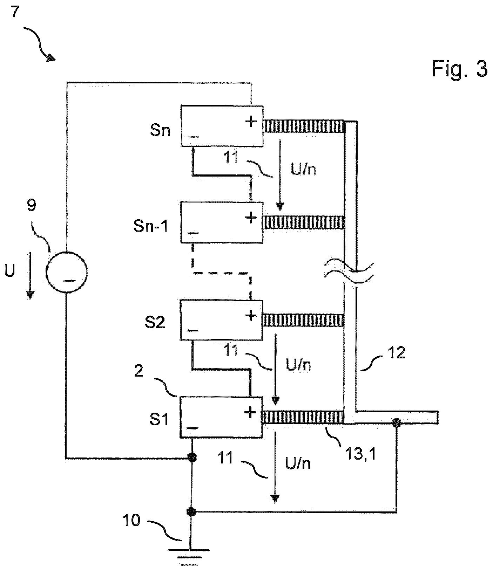

Diese Verwendung wird vorzugsweise bei seriell verschalteten Stack-Einheiten 8 von Wasserstoffgeneratoren eingesetzt, wo die Zuführungsrohrleitungen 13 in eine Sammelleitung 12 elektrisch isoliert ausgeführt sein müssen, da sich die Stack-Einheiten 8 auf verschiedenen Spannungsniveaus befinden, siehe Fig. 3. Die zu isolierende Spannung beträgt bis zu 1500 V, was spezielle Anforderungen an die Konstruktion und Materialauswahl stellt.

Die Verschmutzung 5 auf einem Kunststoffrohr 2 bildet zusammen mit der Feuchtigkeit einen Elektrolyten und es fliesst ein Kriechstrom iv. Wenn der Kriechstrom iv durch Trocknen der Verschmutzung an einer Stelle unterbrochen wird, entsteht dort ein Abreissfunke 6 bei einem Kunststoffrohr, das nichtleitend ist, siehe Fig. 2. Dessen Energie führt zu einer partiellen Veränderung des Isolierstoffes durch thermisches "Verkohlen", was das Material schädigt und fortschreitend leitfähige Pfade erzeugt, welche dauerhaft zur Kriechwegbildung führen und damit die Isolationsfähigkeit des Isolierstoffes unvorhersehbar und undefinierbar reduzieren. Wenn hingegen ein leitender Kunststoff für das Kunststoffrohr 2 verwendet wird, ist der spezifische Durchgangswiderstand p kleiner als der Kriechwiederstand der Verschmutzung 5, wodurch ein Strom ir im Kunststoffrohr 2 fliesst und bei einer Unterbrechung der Verschmutzung 5 kein Abreissfunken mehr entsteht, da an der Unterbrechung praktisch kein Spannungsabfall mehr auftritt.

Fig. 3 zeigt eine schematische Darstellung eines Wasserstoffgenerators mit mehreren elektrisch seriell verschalteten Stack-Einheiten 2 S₁ bis Sₙ. Die Spannungsquelle 9, die mit einem Pol mit einem Erdpotential 10 verbunden ist, speist die Stack-Einheiten 8 mit der Spannung U. Diese teilt sich mit der Anzahl n der Stack-Einheiten 8 als Stack-Teilspannungen 11 auf die Stack-Einheiten 8 auf. Zur Einspeisung des von jeder Stack-Einheit 8 erzeugten Wasserstoffes in die elektrisch leitende metallische Wasserstoff-Sammelleitung 12 müssen die Zuleitungen 13 mit dem erfindungsgemässen Isolationsfitting 1 elektrisch isoliert sein, um Kurzschlüsse der Stack-Teilspannungen 11 und gegen das Erdpotential 4 zu vermeiden. Diese Aufgabe übernimmt das erfindungsgemässe Isolationsfitting 1. Fig. 4 zeigt eine aus dem Stand der Technik bekannte Flanschverbindung 15 mit einer Lackschicht oder einer Isolationsplatte 15 zwischen den beiden Flanschen 14, die die metallischen Rohrleitungen 4 verbinden. Wie bereits erwähnt, eignet sich eine solche Verbindung nicht für ein Medium, das eine gewisse Leitfähigkeit aufweist, vielmehr bedarf es dazu einer durchmesserabhängigen Mindeststecke des Isolationsfittings, bei der das Medium einen minimalen Isolationswiderstand bildet, wie das beim erfindungsgemässen Isolationsfitting 1 der Fall ist.

### Bezugszeichenliste

- 1: Isolationsfitting
- 2: Kunststoffrohr
- 3: Verbindungselement
- 4: Metallische Rohrleitung
- 5: Verschmutzung
- 6: Abreissfunke
- 7: Wasserstoffgenerator
- 8: Stack-Einheit
- 9: Spannungsquelle U
- 10: Erdpotential
- 11: Stack-Teilspannung
- 12: Wasserstoff-Sammelleitung
- 13: Zuleitung
- 14: Flansch
- 15: Isolationsplatte oder Lackschicht

- n: Anzahl Stacks
- Sn: Einzelne Stack-Einheit
- iv: Kriechstrom
- ir: kontinuierlicher Stromfluss im Kunststoffrohr

## Patentansprüche

1. Isolationsfitting (1) für den Einbau in eine metallische Rohrleitung (4), die unter einer elektrischen Spannung steht, beinhaltend, ein Kunststoffrohr (2) und beidseitig daran angeordnete Verbindungselemente (3) zum Verbinden des Isolationsfittings (1) mit der metallischen Rohrleitung (4), **dadurch gekennzeichnet, dass** das Kunststoffrohr (2) zur Isolation leitfähig ist.

2. Isolationsfitting (1) nach Anspruch 1, **dadurch gekennzeichnet, dass** das Kunststoffrohr (2) einen spezifischen Durchgangswiderstand p zwischen 10⁴ bis 10⁹ Ωm aufweist.

3. Isolationsfitting (1) nach einem der Ansprüche 1 oder 2, **dadurch gekennzeichnet, dass** das Kunststoffrohr (2) einen spezifischen Oberflächenwiderstand R□ zwischen 10⁵ bis 10¹² Ω aufweist.

4. Isolationsfitting (1) nach einem der Ansprüche 1 bis 3, **dadurch gekennzeichnet, dass** das Kunststoffrohr (2) einen geringeren spezifischen Durchgangswiderstand p aufweist als der geringste, auftretende Kriechwiderstand der Verschmutzung (5).

5. Isolationsfitting (1) nach einem der Ansprüche 1 bis 4, **dadurch gekennzeichnet, dass** das Kunststoffrohr (2) einen geringeren spezifischen Oberflächenwiderstand R□ aufweist als der Oberflächenwiderstand der durch eine Verschmutzung (5) an der äusseren Oberfläche des Kunststoffrohrs (2) gebildet ist.

6. Isolationsfitting (1) nach einem der Ansprüche 1 bis 5, **dadurch gekennzeichnet, dass** das Kunststoffrohr (2) aus einem Compound hergestellt ist.

7. Isolationsfitting (1) nach Anspruch 6, **dadurch gekennzeichnet, dass** das Compound als Basis einen thermoplastischen Kunststoff aufweist, wobei dem thermoplastischen Kunststoff ein leitfähiges Additiv beigemengt ist.

8. Isolationsfitting (1) nach Anspruch 7, **dadurch gekennzeichnet, dass** dem thermoplastischen Kunststoff zur Erhöhung der Leitfähigkeit Kohlenstoff beigemischt ist.

9. Isolationsfitting (1) nach einem der Ansprüche 7 oder 8, **dadurch gekennzeichnet, dass** als thermoplastischer Kunststoff PEEK eingesetzt ist.

10. Verwendung eines Isolationsfittings (1) nach einem der Ansprüche 1 bis 9 zum Verbinden von Rohrleitungen (4) in Wasserstoffgeneratoren (7).

11. Verwendung eines Isolationsfittings (1) nach einem der Ansprüche 1 bis 9, wobei das Isolationsfitting (1) zur Isolation bei Rohrleitungen (4) die eine elektrische Spannungsdifferenz von > 630 V aufweisen, eingesetzt ist.
